# EUROPEAN PATENT APPLICATION

(11) **EP 3 098 007 A1**
(43) Date of publication of application: **30.11.2016**
(21) Application number: 15169898.2
(22) Date of filing: 29.05.2015
(51) Int. Cl.: B23C 5/10, B23C 5/22, B23C 5/20, B23C 5/06

(54) **A MILLING CUTTING TOOL AND A CUTTING INSERT FOR A MILLING CUTTING TOOL**

(71) Applicant: Sandvik Intellectual Property AB, 811 81 Sandviken (SE)
(72) Inventor: Schmitt, Jeremy, 37190 DRYE (FR); Rué, Marc, FR-37390 Charentilly (FR); Marie, Gilles, FR-37100 Tours (FR)

(57) **Abstract**

A milling cutting tool comprises a tool body (2) having at least one insert pocket (3) and at least one cutting insert (4) releasably fixed to the pocket. A peripheral side surface (10) of the cutting insert has a plurality of support surfaces (12) equally distributed around the cutting insert. The pocket (3) is provided with at least two contact surfaces configured to support one insert support surface each. Fastening means (19, 22, 24) is configured to secure the insert in the pocket. The fastening means has a wedge member (19) with a clamping surface configured to in a securing state bear against one support surface (12) of the insert. The wedge member is securable to and moveably arranged with respect to a tool body portion adjacent to the pocket (3). The clamping surface (20) of the wedge member extends in the securing state from the tool body portion (21) along the pocket (3) while diverging away from the tool body portion (21).

## Description

### TECHNICAL FIELD OF THE INVENTION

The present invention relates to a milling cutting tool according to the preamble of claim 1 comprising a tool body and at least one cutting insert, a tool body for such a cutting tool as well as a cutting insert for milling.

The invention is not restricted to tools for any particular type of milling, but face milling, interpolation and ramping may be mentioned as examples. A cutting insert of such a tool is indexable between as many index positions as the number of support surfaces provided on the cutting insert when received in an insert pocket of the milling cutting tool, and the cutting insert may have one single circular cutting edge or a plurality of cutting edges together forming a polygon of the same order as the number of the support surfaces of the cutting insert for having one separate cutting edge associated with each index position. The invention is neither restricted to any diameter range of such a milling cutting tool, but the diameter may be as small as approximately 10 mm or as large as 160 mm or even larger. A milling cutting tool of this type has normally a plurality of pockets to which cutting inserts are releasably fixed.

It is for the result of the chip-removing machining carried out by the milling tool of vital importance that the cutting insert is properly supported in a fixed position in the insert pocket. It is at the same time important to design such a cutting insert and the support surfaces thereof so that no part of the cutting insert will be damaged by the milling machining carried out degrading the result of the machining, damaging the exposed support surfaces or side surfaces of the cutting insert, and/or requiring a premature replacement of the cutting insert. The support is mainly to be provided to side surfaces of the cutting insert in a substantial radial direction with respect to the rotation axis of the cutting tool, but it has of course also to be ensured that the cutting insert may not move in the axial direction when fixed in the insert pocket of the rotating tool body, which is the reason for providing the pocket with at least two contact surfaces configured to jointly provide axial and radial support to the cutting insert received in the pocket. "Jointly provide axial and radial support" means that none of the contact surfaces has in fact to be directed strictly axially or radially but so that the contact surfaces together provide axial and radial support to the cutting insert.

An object desire of milling cutting tools of this type is to be able to easily and rapidly carry out indexing, i.e. change from one index position to another of the cutting insert, without any risk of securing the cutting insert in the pocket in an improper position. Another object desire which may in certain situations exist is a possibility to obtain a cutting tool with a high density, i.e. a milling cutting tool with a close pitch, in which the pitch is the distance between a point on one edge of the cutting insert of the tool to the same point on the cutting edge of the next cutting insert of the tool as seen in the direction of rotation of the tool. Such a desire is depending upon which type of material is to be machined by the tool and the type of machining to be carried out. Milling cutting tools with such a high density are for example suitable for machining interrupted cast-iron surfaces, roughing cast-iron and small depths of cut in steel. They are also suitable in materials where the cutting speed has to be kept low, for instance in titanium. A possibility to arrange cutting inserts at a high density is particularly interesting for tool bodies with small diameters.

### BACKGROUND ART

US 8 641 330 B2 discloses a milling cutting tool of the type defined in the introduction. This milling tool has some properties desired to be improved, in which one property is the easiness and speed of transferring a cutting insert received in a pocket of the tool body from one index position to a new index position.

### SUMMARY OF THE INVENTION

The object of the present invention is to provide a milling cutting tool, a tool body and a cutting insert of the type defined in the introduction being improved in at least some aspect with respect to such milling cutting tools, tool bodies and cutting inserts already known.

This object is with respect to the milling cutting tool obtained by providing such a cutting tool with the features listed in the characterizing part of appended claim 1.

The design of the wedge member of the fastening means to interact by the clamping surface thereof with the support surface of the cutting insert in a securing state of the fastening means so that this clamping surface will bear against the support surface while extending from a tool body portion adjacent to the pocket and along the pocket while diverging away from the tool body portion, will make it possible to easily and quickly transfer the cutting insert from one index position to another. The diverging feature reduces the distance necessary to move the wedge member with respect to the tool body portion from the securing state to obtain the releasing state allowing indexing of the cutting insert. The distance for transfer of the fastening means back to the securing state will of course be correspondingly reduced. This may considerably shorten the time needed for indexing cutting inserts of such a milling cutting tool, especially if the tool has a high number on such cutting inserts. Another advantage of the milling cutting tool according to the invention is that it offers a possibility to arrange cutting inserts therein at a high density, i.e. with a close pitch, since the wedge member is configured to act upon support surfaces located on the peripheral side surface of the cutting insert, so that no part of the fastening means will be introduced on for instance the top surface of the insert to act upon the insert and require free space to enable this. A further advantage of the design and the peripheral positioning of the fastening means is that there will be no risk that the fastening means with the wedge member will be damaged by chips during a milling operation of the milling cutting tool, since it will not be located in and restricting any chip space of the milling cutting tool.

According to an embodiment of the invention the clamping surface of the wedge member diverges with respect to the tool body portion to which the wedge member is secured in the securing state while making an angle of 10°-70°, 15°-60° or 15°-45° with the tool body portion. Such an extension of the clamping surface and the corresponding support surface of the cutting insert in the securing state is suitable for enabling efficient clamping and securing of the cutting insert in the pocket in the securing state of the fastening means and a short distance movement of the wedge member for transferring the fastening means to the releasing state and by that a quick indexing of the cutting insert. If the wedge member is attached to an envelope surface portion of the tool body, the angle of 10°-70°, 15°-60° or 15°-45° with the tool body portion is equivalent to the angle that the clamping surface makes with the rotation axis of the tool. If the wedge member is attached to a front end portion of the tool body, the angle of 10°-70°, 15°-60° or 15°-45° with the tool body portion is equivalent to the angle that the clamping surface makes with a plane perpendicular to the rotation axis of the tool.

According to an embodiment of the invention the fastening means is configured to secure the wedge member to the tool body portion having the form of an envelope surface portion of the tool body, the clamping surface forming an envelope end limitation of the pocket. This constitutes an advantageous way of realising the fastening means while obtaining the advantages of the invention mentioned above.

According to another embodiment of the invention the fastening means is configured to secure the wedge member to the tool body portion having the form of a front end portion of the tool body, the clamping surface forming a front end limitation of the pocket. This constitutes another advantageous possible location of the fastening means and offers the additional possibility to provide one of the at least two contact surfaces to jointly provide axial and radial support to an insert by the clamping surface of the wedge member.

According to another embodiment of the invention one of the at least two contact surfaces in the pocket configured to form support for a support surface of the cutting insert is parallel with or converging with respect to the clamping surface of the wedge member to bear upon the support surface of the cutting insert in the securing state of the fastening means as seen in a direction out through an opening of the pocket. This means that the wedge member will in the securing state deliver a pressure on the insert wedging the cutting insert between the contact surfaces of the pocket to be maintained in the pocket.

According to another embodiment of the invention the support surfaces of the cutting insert have an extension in the direction towards the bottom surface sloping outwardly away from a centre axis of the cutting insert perpendicular to the bottom surface, and the at least two contact surfaces of the pocket have a corresponding sloping with respect to the base for forming support to the support surfaces of the cutting insert. Such an extension of the support surfaces of the cutting insert and the contact surfaces of the pocket ensures that the bottom surface of the cutting insert is by the action of the wedge member pressed against the base of the pocket and by that held firmly in place in spite of possibly high forces acting upon the cutting insert during machining operation.

According to another embodiment of the invention one of the at least two contact surfaces of the pocket is configured to mainly provide a radial support and one is configured to mainly provide an axial support to the the cutting insert. Such an orientation of the contact surfaces results in a well-defined support of the cutting insert received in the pocket.

According to another embodiment of the invention the number of support surfaces on the peripheral side surface of the cutting insert is at least 4, and the number is according to another embodiment even. An even number of the support surfaces facilitates achievement of positions of contact surfaces in the pocket resulting in a firm securing of the cutting insert in the pocket, especially to obtain that the support surface acted upon by the wedge member is parallel with a support surface bearing against a contact surface of the pocket.

According to another embodiment of the invention the number of support surfaces on the peripheral side surface of the cutting insert is 4, 6, 8, 10, 12, 14 or 16. These are suitable numbers of index positions for a cutting insert according to the invention, in which a number of 6 is especially advantageous. For instance, larger sized cutting inserts may preferably be provided with more support surfaces and index positions than smaller sized inserts.

According to another embodiment of the invention there will be at least one support surface of the cutting insert received in the pocket between the support surface thereof beared upon by the clamping surface of the wedge member and the support surface to which the contact surface is configured to provide support. Such a displacement of the action of the wedge member upon the support surface of the cutting insert and of the interaction of the support surface with the contact surface is favourable for a steady fit of the cutting insert in the pocket.

According to another embodiment of the invention the fastening means comprises a bore in the tool body portion provided with an inner thread and a securing member provided with a corresponding outer thread configured to be received in the bore and turned therein for tightening and loosening the wedge member with respect to the tool body and the cutting insert received in the pocket. This means that the wedge member with the divergence of the clamping surface thereon may by a few turns of the securing member, such as a screw, be transferred between the securing state and the releasing state for quick and reliable indexing of the cutting insert.

According to another embodiment of the invention the cutting insert is reversible in the sense that the bottom and top surfaces thereof are identical and a cutting edge is formed between each of these surfaces and the peripheral side surface of the cutting insert, which allows twice as many indexations of the cutting insert as the number of the support surfaces of the cutting insert.

The object of the present invention is with respect to the tool body for a milling cutting tool obtained by providing such a tool body with the features of the independent claim directed to such a tool body. The advantages of such a tool body and embodiments thereof appear from the above discussion of a milling cutting tool according to the invention and the embodiments thereof.

The object of the present invention is with respect to the cutting insert for milling obtained by providing a cutting insert according to the independent claim directed to such a cutting insert. An advantage of such a cutting insert is that it may by the extension of the support surfaces thereof have the bottom surface thereof efficiently urged towards the base of the pocket of the tool body in the milling cutting tool counteracting a movement of the cutting insert out of the pocket or in the pocket when received in the pocket.

According to an embodiment of the invention the peripheral side surface is at the location of each support surface provided with a recess having a surface directed oppositely to the top surface having the cutting edge formed at the intersection thereof with the peripheral side surface. Such a recess may hide and protect the wedge member from chips when machining a work piece by the cutting edge.

According to another embodiment of the invention the cutting insert is single-sided with the cutting edge formed only at the intersection of the side surface with the top surface, and according to a further development of this embodiment the extension of the support surfaces towards the bottom surface reaches the region of the bottom surface or reaches the bottom surface, which enables a firm fit of the cutting insert in the pocket of the tool body efficiently keeping the cutting insert in place.

According to another embodiment of the invention constituting a further development on the single-sided insert the extension of the support surfaces towards the bottom surface starts at the surface of the recess directed oppositely to the top surface.

Other advantageous features as well as advantages of the present invention appear from the description following below.

### BRIEF DESCRIPTION OF THE DRAWINGS

With reference to the appended drawings, below follows a specific description of embodiments of the invention cited as examples.

In the drawings:
- Fig 1: shows a perspective view of a cutting tool for milling as well as a cutting insert and means for fastening the cutting insert in a pocket of a tool body of the tool according to a first embodiment of the invention,
- Fig 2: is a view of the cutting tool according to Fig 1 perpendicularly to a front end thereof,
- Fig 3: is a perspective view of a cutting insert according to an embodiment of the invention,
- Fig 4: is a cross-section view of the cutting insert shown in Fig 3,
- Fig 5: is a perspective view of a wedge member of a fastening means of the cutting tool shown in Fig 1,
- Fig 6: is a side elevation view on the cutting tool shown in Fig 1,
- Fig 7: is a cross-section view along VII-VII in Fig 6,
- Fig 8: is a cross-section view along VIII-VIII in Fig 7,
- Fig 9: is a view corresponding to Fig 7 of a part of a cutting tool according to a second embodiment of the invention, and
- Fig 10: is a side elevation view on a cutting tool according to a third embodiment of the invention.

### DETAILED DESCRIPTION OF EMBODIMENTS OF THE INVENTION

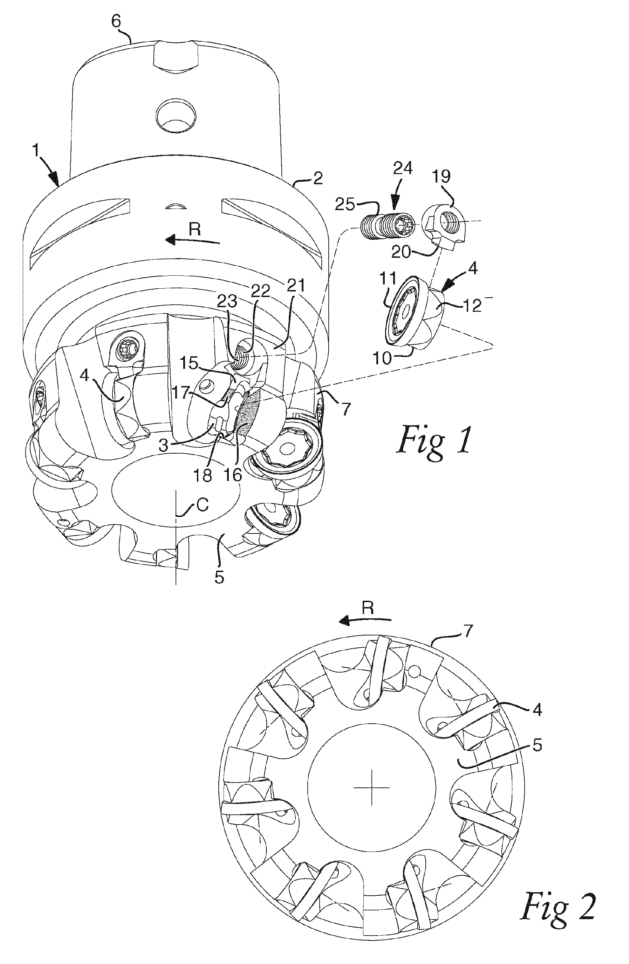

A milling cutting tool 1 according to a first embodiment of the invention is shown in Fig 1, and Figs 2-8 do also show a cutting tool or parts thereof according to this embodiment and reference will be made to all these figures in parallel. The tool has a tool body 2 having a plurality of seats or pockets 3, in fact seven such pockets, each pocket being configured to receive a cutting insert 4 according to the invention releasably fixed to the pocket. One cutting insert 4 is removed from a pocket 3 for illustrating the structure of the pocket. The tool body 2 includes a front end 5 and a rear end 6 between which a central rotation axis C extends around which the tool is rotatable in a direction of rotation R. The pockets 3 are formed in a transition between the front end and an envelope surface 7 extending between the front 5 and the rear end 6 of the tool body.

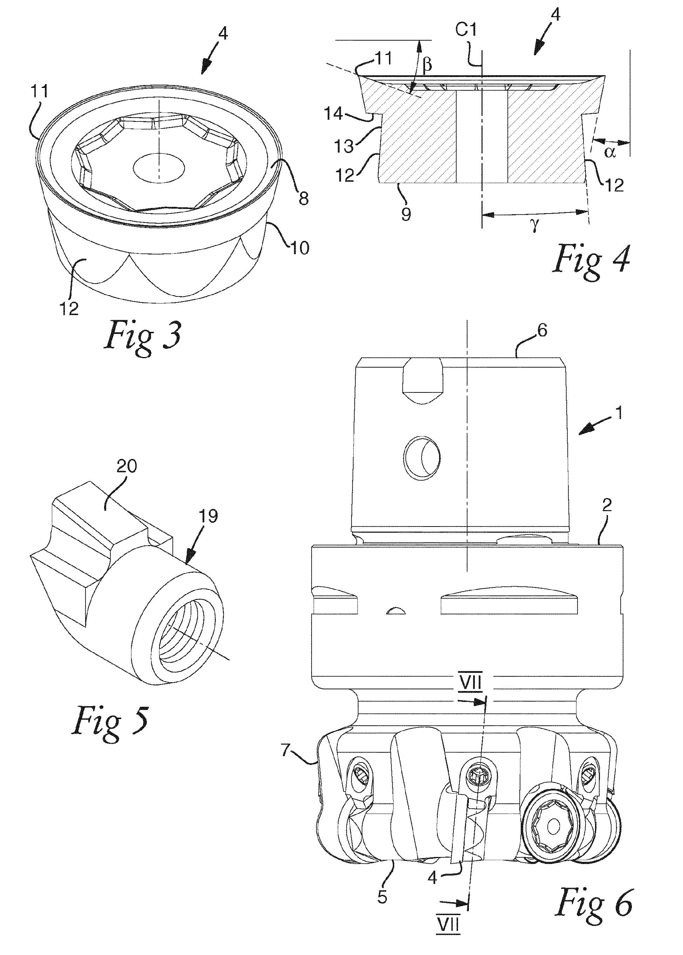

Reference is now made in particular to Figs 3 and 4 showing the cutting insert 4 comprising a top surface 8, a bottom surface 9 and a peripheral side surface 10 separating the top surface from the bottom surface. A cutting edge 11 with a circular extension is formed at the intersection of the side surface 10 and the top surface 8. The peripheral side surface 10 is provided with a plurality of, in fact 6, flat support surfaces 12 equally distributed around the cutting insert. The peripheral side surface 10 is at the location of each support surface 12 provided with a recess 13 having a surface 14 directed oppositely to the top surface 8. The support surfaces 12 extend from the surface 14 of the respective recess 13 towards and to the region of the bottom surface 9 while sloping outwardly away from a centre axis C1 of the cutting insert perpendicular to the bottom surface 9. It is shown in Fig 4 how this direction of extension makes an angle γ of 4° with respect to the centre axis C1. This angle is preferably 2°-15°. It appears from Fig 4 that the peripheral side surface extends from the cutting edge 11 in the direction of the bottom surface 9 towards the centre axis C1 by defining a clearance angle a, which here is 11 ° and preferably 7°-15°. Furthermore, the cutting insert has a positive rake angle β formed by a corresponding inclination of the top surface away from the cutting edge 11.

Each insert pocket 3, see especially Figs 1, 7 and 8, comprises a side wall 15 generally transvers to a base 16. The side wall 15 of the pocket is provided with two contact surfaces 17, 18 configured to support two of the insert support surface 12 and jointly provide axial and radial support to the cutting insert received in the pocket with respect to the central rotation axis C of the tool.

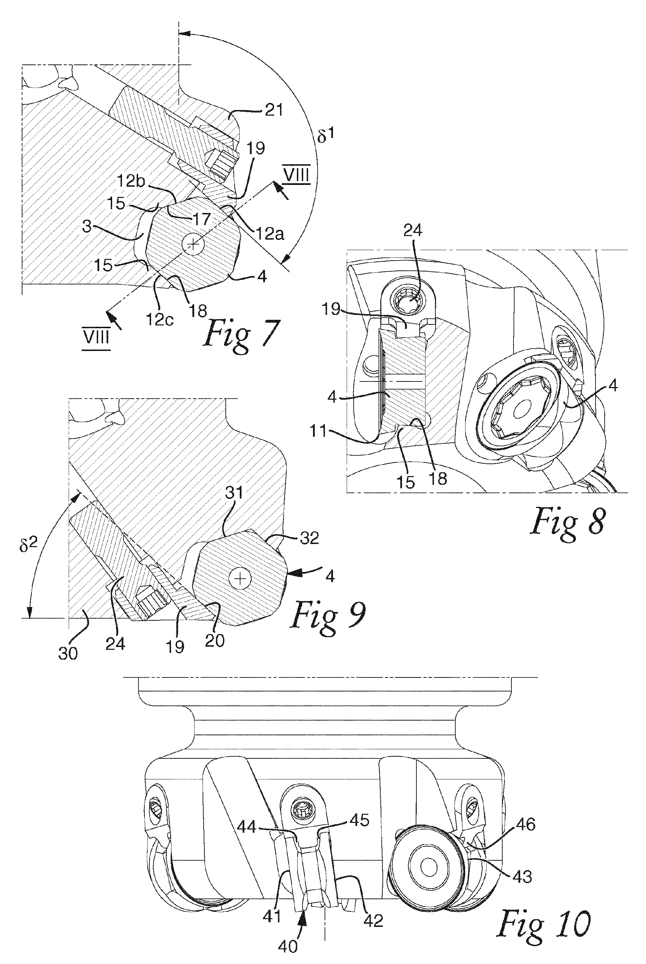

The tool is provided with fastening means configured to secure the insert 4 in the pocket 3 while pressing the bottom surface 9 of the cutting insert against the base 16 of the pocket. The construction of this fastening means appears especially from Figs 1, 5, 7 and 8, and it comprises a wedge member 19 (see Fig 5) with a clamping surface 20 configured to in a securing state of the fastening means bear against one support surface 12a and press the other of the two support surfaces 12b and 12c of the cutting insert against the contact surfaces 17 and 18, respectively, of the pocket providing axial and radial support to the cutting insert as shown in Fig 7. The wedge member 19 is securable to and moveably arranged with respect to a tool body portion 21 having the form of envelope surface portion of the tool body adjacent to the pocket 3, wherein the clamping surface 20 is forming an envelope end limitation of the pocket. The clamping member is moved by transferring the fastening means between a securing state and a releasing state allowing indexing of the cutting insert in the pocket to have the wedge member to bear against another support surface 12 of the cutting insert in a new securing state.

The fastening means does further comprise a bore 22 in the tool body portion 21 provided with an inner thread 23 and a securing member in the form of a screw 24 provided with a corresponding outer thread 25 configured to be received in the bore and turned therein for tightening and loosening the wedge member 19 with respect to the tool body 2 and by that the cutting insert received in the pocket 3. These parts of the fastening means are arranged and designed so that the clamping surface 20 of the wedge member 19 and by that the support surface 12a of the insert bearing thereagainst extend in the securing state of the insert from the tool body portion 21 along the pocket 3 while diverging by an angle of 180°-δ1 away from tool body portion 21, as will appear especially from Figs 1 and 7. This angle is equivalent to the angle that the clamp surface 20 makes with the rotation axis C of the tool when the wedge member 19 is attached to the tool body portion 21 forming an envelope surface 7 of the tool. This means that it is enough with a few turns of the screw 24 for transferring the fastening means between the securing state and the releasing state enabling a quick indexing of the cutting insert received in the pocket.

The wedge member 19 will in the securing state of the fastening means shown in Figs 7 and 8 bear against the support surface 12a in parallel with the contact surface 18 forming a support for another support surface 12c of the cutting insert for securing the cutting insert in the pocket. The contact surface 18 does then mainly form a radial support to the cutting insert, whereas the contact surface 17 mainly forms an axial support to the cutting insert. The sloping of the support surfaces 12 outwardly towards the bottom surface 9 of the cutting insert results at the same time in a pressing of the bottom surface 9 against the base 16 of the pocket by the pressing action of the clamping surface 20 of the wedge member 19 against this support surface of the cutting insert. The two contact surfaces 17, 18 of the pocket have for that sake a corresponding sloping with respect to the base 16 for forming appropriate support to a respective support surface 12 of the cutting insert.

It appears from Fig 8 that the clamping surface 20 is inclined for bearing tightly against the sloping support surface of the insert.

Fig 9 illustrates a cutting tool according to a second embodiment of the invention differing from the one shown in Figs 1-8 by the fact that the fastening means is configured to secure the wedge member to the tool body portion in the form of a front end portion 30 of the tool body forming a front end limitation of the pocket 3, so that the contact surface 18 in the first embodiment providing mainly radial support to an insert has been replaced by the clamping surface 20 of the wedge member, and now two contact surfaces 31, 32 will both mainly form an axial support to the insert. Thus, the pocket has in this embodiment three contact surfaces 20, 31 and 32. The angle made by the clamping surface with the tool body portion is here, when the wedge member 19 is attached to the front end 5 of the tool, δ2 and equivalent to the angle that the clamping surface 20 makes with a plane perpendicular to the rotation axis C of the tool. This angle δ2 and the corresponding angle (180°- δ1) in the embodiment according to Fig 7 is 10°-70°, 15°-60° or 15°-45°.

Fig 10 illustrates schematically a cutting tool according to a third embodiment of the invention, in which the cutting inserts 40 are reversible in the sense that the bottom and top surfaces thereof are identical and a cutting edge 41, 42 is formed between each of the bottom and top surfaces and the peripheral side surface of the cutting insert. Furthermore, support surfaces 47 equally distributed around the cutting insert are formed by recesses 43 and have here no sloping extension, but extend in parallel with the centre axis of the cutting insert perpendicular to the bottom/top surface thereof. This means that a surface 44, 45 corresponding to the surface 14 in the embodiment shown in Fig 4 is formed "under" each cutting edge 41, 42 of the cutting insert. The wedge member 46 is in this embodiment configured to press against a support surface 43 of the cutting insert to keep it in the pocket as well as a surface 45 closest to the side of the cutting insert acting as a bottom for pressing the bottom surface of the cutting insert against the base of the pocket in the securing state of the fastening means.

The invention is of course not restricted to the embodiments thereof described above, but many possibilities to modifications thereof would be apparent to a person with skill in the art without departing from the scope of the invention as defined in the appended claims.

The support surfaces equally distributed around the cutting insert may be concave instead of flat.

It is in a modification of the embodiment shown in Fig 10 possible that the wedge member is pressing against the surface 45 and against the surface 47 of the recess 43 or only against one of these two surfaces. The recess 43 may also have a V-shape without any bottom surface, and the wedge member will then press against the recess flank surface closest to the pocket base. The recess may also have a rounded shape.

## Claims

1. A milling cutting tool, comprising:
• a tool body (2) including a front end (5) and a rear end (6), between which a central rotation axis (C) extends around which the tool is rotatable in a direction of rotation (R),
• at least one insert pocket (3) formed in a transition between the front end and an envelope surface (7) extending between the front end and the rear end of the tool body, the insert pocket comprising at least one side wall (15) generally transverse to a base (16),
• at least one cutting insert (4, 40) releasably fixed to the pocket, the cutting insert comprising a top surface (8), a bottom surface (9), a peripheral side surface (10) and at least one cutting edge (11, 41, 42) formed at the intersection of the peripheral side surface with the top surface, the peripheral side surface of the cutting insert having a plurality of support surfaces (12, 43) equally distributed around the cutting insert,
the side wall (15) of the pocket including at least two contact surfaces (17, 18) configured to support at least two support surfaces (12, 43) and jointly provide axial and radial support to the cutting insert received in the pocket with respect to the central rotation axis (C) of the tool, and
• fastening means (19, 22, 24) configured to secure the cutting insert in the pocket with the bottom surface (9) thereof bearing against the base (16) of the pocket,
***characterized* in that** the fastening means comprises a wedge member (19, 46) with a clamping surface (20) configured to, in a securing state of the fastening means, bear against one of the support surfaces (12a, 43) of the cutting insert and press the other of the at least two support surfaces of the cutting insert against the contact surfaces (17, 18, 31, 32) of the pocket providing axial and radial support to the cutting insert, that the wedge member is securable to and moveably arranged with respect to a tool body portion (21, 30) adjacent to the pocket (3) between the securing state and a releasing state allowing indexing of the cutting insert in the pocket, and that the clamping surface (20) of the wedge member and the support surface (12a) of the cutting insert bearing thereagainst extend in the securing state from the tool body portion (21, 30) along the pocket (3) while diverging away from the tool body portion to which the wedge member is secured.

2. The cutting tool according to claim 1, ***characterized* in that** the clamping surface (20) of the wedge member (19, 46) diverges with respect to the tool body portion (21, 30) to which the wedge member is secured in the securing state while making an angle of 10°-70°, 15°-60° or 15°-45° with the tool body portion (21, 30).

3. The cutting tool according to claim 1 or 2, ***characterized* in that** the fastening means is configured to secure the wedge member (19, 46) to the tool body portion having the form of an envelope surface portion (21) of the tool body, the clamping surface (20) forming an envelope end limitation of the pocket (3).

4. The cutting tool according to claim 1 or 2, ***characterized* in that** the fastening means is configured to secure the wedge member (19) to the tool body portion having the form of a front end portion (30) of the tool body, the clamping surface (20) forming a front end limitation of the pocket (3).

5. The cutting tool according to claim 4, ***characterized* in that** one of the at least two contact surfaces is provided by the clamping surface (20) of the wedge member (19) providing radial support to one support surface of the cutting insert (4).

6. The cutting tool according to any of the preceding claims, ***characterized* in that** one (18) of the at least two contact surfaces in the pocket configured to form support for a support surface of the cutting insert is parallel with or converging with respect to the clamping surface (20) of the wedge member (19) to bear upon the support surface (12a) of the cutting insert in the securing state of the fastening means as seen in a direction out through an opening of the pocket (3).

7. The cutting tool according to any of the preceding claims, ***characterized* in that** the support surfaces (12) of the cutting insert have an extension in the direction towards the bottom surface (9) sloping outwardly away from a centre axis (C1) of the cutting insert perpendicular to the bottom surface, and that the at least two contact surfaces (17, 18) of the pocket (3) have a corresponding sloping with respect to the base (16) for forming support to the support surfaces of the insert.

8. The cutting tool according to any of the preceding claims, ***characterized* in that** one (18) of the at least two contact surfaces of the pocket is configured to mainly provide a radial support and one (17) is configured to mainly provide an axial support to the cutting insert.

9. The cutting tool according to any of the preceding claims, ***characterized* in that** the number of the support surfaces (12, 43) on the peripheral side surface of the cutting insert is at least 4.

10. The cutting tool according to any of the preceding claims, ***characterized* in that** the number of support surfaces (12, 43) on the peripheral side surface of the cutting insert is even.

11. The cutting tool according to claim 10, ***characterized* in that** the number is 4, 6, 8, 10, 12, 14 or 16.

12. The cutting tool according to any of the preceding claims, ***characterized* in that** there will be at least one support surface (12) of the cutting insert (4) received in the pocket (3) between the support surface thereof beared upon by the clamping surface of the wedge member and the support surface to which the contact surface is configured to provide support.

13. The cutting tool according to any of the preceding claims, ***characterized* in that** the fastening means comprises a bore (22) in the tool body portion (21, 30) provided with an inner thread (23) and a securing member (24) provided with a corresponding outer thread (25) configured to be received in the bore and turned therein for tightening and loosening the wedge member (19, 46) with respect to the tool body and the cutting insert (4, 40) received in the pocket.

14. A cutting tool according to any of the preceding claims, ***characterized* in that** the cutting insert (40) is reversible in the sense that the bottom and top surfaces thereof are identical and a cutting edge (41, 42) is formed between each of the bottom and top surfaces and the peripheral side surface of the cutting insert.

15. A tool body for a milling cutting tool, ***characterized* in that** it comprises a front end (5) and a rear end (6), between which a central rotation axis (C) extends around which the tool body is configured to rotate in a direction of rotation (R), and at least one insert pocket (3) formed in a transition between the front end and an envelope surface (7) extending between the front end and rear end, that the insert pocket comprises at least one side wall (15) generally transverse to a base (16), the side wall (15) including at least two contact surfaces (17, 18) configured to jointly provide axial and radial support for at least two support surfaces of a cutting insert to be received in the pocket, that it further comprises fastening means (19, 22, 24) configured to secure the cutting insert in the pocket, that the fastening means comprises a wedge member (19) with a clamping surface (20) configured to, in a securing state of the fastening means, bear against at least one of the support surfaces of the cutting insert and press the other of the at least two support surfaces of the cutting insert against the contact surfaces of the pocket providing axial and radial support to the insert, and that the wedge member (19) is securable to and moveably arranged with respect to a tool body portion (21, 30) adjacent to the pocket (3) between the securing state and a releasing state allowing indexing of the cutting insert in the pocket, and that the clamping surface (20) of the wedge member (19) and the support surface of the insert bearing thereagainst extend in the securing state from the tool body portion (21, 30) along the pocket (3) while diverging away from the tool body portion to which the wedge member is secured.

16. A cutting insert for milling comprising:
a top surface (8), a bottom surface (9), a peripheral side surface (10) and at least one cutting edge (11) formed at the intersection of the side surface with the top surface, the peripheral side surface of the cutting insert having a plurality of generally flat or concave support surfaces (12) equally distributed around the cutting insert,
***characterized* in that** the support surfaces (12) have an extension in the direction towards the bottom surface (9) sloping outwardly away from a centre axis (C1) of the cutting insert perpendicular to the bottom surface.

17. The cutting insert according to claim 16, ***characterized* in that** the peripheral side surface (10) is at the location of each support surface (12) provided with a recess (13) having a surface (14) directed oppositely to the top surface having the cutting edge (11) formed at the intersection thereof with the side surface.

18. The cutting insert according to any of claims 16 and 17, ***characterized* in that** it is single-sided with the cutting edge (11) formed only at the intersection of the side surface (10) with the top surface (8).

19. The cutting insert according to claim 18, ***characterized* in that** the extension of the support surfaces (12) towards the bottom surface (9) reaches the region of the bottom surface or reaches the bottom surface.

20. The cutting insert according to claim 17, ***characterized* in that** the extension of the support surface (12) towards the bottom surface starts at the surface (14) of the recess (13) directed oppositely to the top surface (9).
